Europäisches Patentamt

European Patent Office

Office européen des brevets

(19)

(11) Numéro de publication : **0 441 678 A2**

# (12) DEMANDE DE BREVET EUROPEEN

(21) Numéro de dépôt : **91400210.0**

(22) Date de dépôt : **29.01.91**

(51) Int. Cl.⁵ : **G09B 27/08, G04B 19/22**

(30) Priorité : **30.01.90 FR 9001042**

(43) Date de publication de la demande :
**14.08.91 Bulletin 91/33**

(84) Etats contractants désignés :
**DE DK ES FR GB IT NL**

(71) Demandeur : **Le Cren, Roger**
**5 Avenue de Joinville**
**F-94130 Nogent sur Marne (FR)**
Demandeur : **Domen, Jean-Paul**
**75, rue du Moulin Vert**
**F-75014 Paris (FR)**

(72) Inventeur : **Domen, Jean-Paul**
**75 rue du Moulin Vert**
**F-75014 Paris (FR)**

(54) **Globe terrestre.**

(57)      Globe terrestre lumineux simulant le déroulement des jours et de nuits sur terre en accord avec les saisons, grâce à un mécanisme d'horlogerie (88) entraînant séparément une sphère (10) solidaire d'un arbre journalier (60) et un écran (148-156) solidaire d'un arbre annuel (106). Le globe indique également la date du jour, par la position relative de l'image (44) du soleil au zénith et des graduations d'un anneau de calendrier annuel entourant la sphère (10) et l'heure en tout lieu, par la position relative des fuseaux horaires et des graduations d'un anneau de cadran journalier, monté glissant sur le précédent.

Le globe est pourvu d'un dispositif manuel de mise à jour comportant deux roues dentées transparentes (166-170) entraînant l'arbre annuel (106) et l'écran (148-156) par le moyen d'un bouton de commande polaire (172) et grâce à la présence d'un couplage à friction calibrée (114) disposé entre l'arbre annuel (106) et le mécanisme d'horlogerie (88). La mise à l'heure manuelle du globe est possible du fait de la présence d'un autre couplage à friction calibrée (101) entre l'arbre journalier (60) et le mécanisme d'horlogerie.

EP 0 441 678 A2

Fig. 3

## GLOBE TERRESTRE

L'invention se rapporte aux globes terrestres adaptés à simuler l'éclairement de la terre par le soleil et notamment à ceux équipés de moyens pour afficher la date du jour (globes-calendriers) et pour indiquer l'heure en tout lieu (globes-horloges).

De tels globes terrestres sont décrits dans différents brevets accordés aux demandeurs. Dans le brevet européen N° 0.217.707 délivré le 27 juin 1990 et dans le brevet américain N°4.714.351 délivré le 22 décembre 1987, est décrit un globe terrestre simulant l'éclairement de la terre par le soleil et fonctionnant en globe-calendrier. Dans le certificat d'addition français N° 87.04889 est décrit un globe terrestre simulant l'éclairement de la terre par le soleil et fonctionnant à la fois en globe-calendrier et en globe-horloge.

Selon ces brevets, un globe terrestre adapté à simuler l'éclairement de la terre par le soleil comprend :

– une sphère creuse à paroi translucide représentant les continents, pourvue d'un arbre polaire creux, dit arbre journalier, rigidement lié au pôle Sud et monté sur un support ;

– un écran opaque à contour sensiblement circulaire, pourvu d'un arbre de rotation, dit arbre annuel, disposé suivant un diamètre du contour ;

– une source lumineuse électrique solidaire de l'arbre annuel, la source et l'écran étant adaptés à coopérer ensemble pour créer sur la paroi de la sphère , deux zones sensiblement hémisphériques, respectivement éclairée et obscure ;

– un sous-ensemble électromécanique comportant :

. un boîtier pourvu de paliers occupés par les arbres journalier et annuel, les paliers étant disposés de manière que les axes des arbres se coupent sensiblement au centre de la sphère, suivant un angle sensiblement égal à 23°27',

. un mouvement électrique d'horlogerie relié à un premier et à un second trains d'engrenages, le premier train étant disposé entre le mouvement d'horlogerie et l'arbre journalier et le second train, disposé entre l'arbre journalier et l'arbre annuel ;

– le sous-ensemble électromécanique étant adapté à faire tourner la zone éclairée autour de l'axé de l'arbre journalier à raison d'un tour par jour sidéral et autour de l'axe de l'arbre annuel, à raison d'un tour par année tropique ;

– des moyens pour mettre la position de l'hémisphère éclairé en accord avec une date de l'année.

Selon ces mêmes brevets, un globe terrestre du genre précédent, adapté en outre à fonctionner en globe-calendrier comprend de plus :

– une couronne graduée en calendrier annuel de 365,25 jours, coaxialement disposée par rapport à l'arbre annuel et concentriquement placée par rapport à la sphère ;

– un index solaire rigidement lié à l'arbre annuel, adapté à projeter une image du soleil au centre de la zone éclairée ;

– l'index solaire et la couronne de calendrier coopérant ensemble pour que la position relative de l'image du soleil et des graduations de calendrier indique une date de l'année.

Dans les globes-calendriers décrits dans ces brevets, la date affichée est mise à jour au moyen du moteur électrique du mouvement d'horlogerie fonctionnant en accéléré. Dans ces conditions, les vitesses nominale et de mise à jour du mouvement électrique d'horlogerie du globe sont dans un rapport d'au moins cinquante mille afin que la mise à jour puisse se faire assez rapidement, en moins de dix minutes par exemple. Les micromoteurs de type pas à pas qui équipent les mouvements électriques d'horlogerie ne sont guère adaptés à fonctionner longtemps avec une telle gamme de vitesses et, en outre, les circuits électroniques adaptés à faire tourner ces moteurs à ces mêmes vitesses sont des circuits spécifiques relativement onéreux.

Un premier objet principal de l'invention est de construire un globe terrestre du genre décrit dans les deux brevets cités, dans lequel les moyens de mise à jour du globe-calendrier ainsi constitué forment un ensemble entièrement mécanique, à la fois simple, efficace, fiable et peu onéreux.

Selon le certificat d'addition cité, le globe-calendrier décrit fonctionne également en globe-horloge. A cet effet, l'arbre journalier est monté tournant sur son support, le boîtier du sous-ensemble électromécanique peut être rendu solidaire de ce support et la couronne graduée en calendrier annuel est un anneau plan ouvert entourant la sphère, monté basculant aux extrémités d'une fourche à deux branches, les graduations de calendrier annuel et de cadran journalier figurant respectivement sur les deux faces de l'anneau. Deux butées permettent de fermer cet anneau et de le placer au choix dans le plan de l'écliptique et dans celui de l'équateur, le changement se faisant par un renversement presque complet de l'anneau autour de la sphère. Un tel anneau et de telles butées sont à la fois peu esthétiques, difficiles à bien réaliser et peu commodes à mettre en oeuvre.

Un deuxième objet principal de l'invention est de construire un globe terrestre perfectionné adapté à simuler l'éclairement de la terre par le soleil et à fonctionner à la fois en globe-calendrier et en globe-horloge, grâce à des moyens dérivés de ceux décrits dans le certificat d'addition cité quine présentent aucun de leurs défauts et qui, au contraire, sont à la fois esthétiques, aisés à réaliser et commodes d'emploi. De plus, le globe sera pourvu de moyens mécaniques de mise à l'heure présentant les mêmes avantages que ceux prévus ci-dessus pour sa mise à jour.

Dans les deux brevets cités, l'ensemble formé par le mouvement électrique d'horlogerie et le premier train d'engrenages est adapté à faire tourner la zone éclairée du globe autour de l'axe de l'arbre journalier à raison d'un tour par jour solaire moyen, lorsque la période des impulsions de commande du moteur pas à pas de ce mouvement est un nombre entier de secondes. Pour obtenir la vitesse nominale prévue, à savoir un tour par jour sidéral, la période de ces impulsions est affectée d'un facteur égal à (365,25 / 366,25). Ce qui, nécessairement, conduit à des circuits spécifiques particulièrement onéreux.

Un troisième objet principal de l'invention est de pallier cet inconvénient et pour cela, de faire appel à un mouvement électrique d'horlogerie de type standard et de construire un premier train d'engrenages exactement adapté à sa fonction.

Dans les deux brevets cités, une seconde vitesse rapide de rotation du moteur du mouvement électrique d'horlogerie est prévue. Cela, pour que le globe terrestre adapté à représenter l'éclairement de la terre par le soleil et à fonctionner à la fois en globe-calendrier et en globe-horloge puisse être transformé en un mobile simulant en quelques minutes le déroulement d'une journée sur terre. A cet effet, le circuit électronique spécifique visé ci-dessus est à nouveau utilisé. avec les inconvénients de prix qu'il comporte.

Un quatrième objet principal de l'invention est de construire un globe terrestre adapté à simuler l'éclairement de la terre par le soleil et à fonctionner à la fois en globe-calendrier, en globe-horloge et en mobile de démonstration et à cet effet, de faire en outre appel à des circuits peu onéreux pour alimenter le moteur du mouvement électrique d'horlogerie à la vitesse nominale et en accéléré.

Selon une première caractéristique de l'invention, dans un globe terrestre du genre décrit ci-dessus, adapté à simuler l'éclairement de la terre par le soleil et à fonctionner en globe-calendrier, des moyens mécaniques de mise à jour sont prévus qui comprennent :
- un couplage à friction calibrée, disposé entre l'arbre annuel et le second train d'engrenages ;
- un bouton extérieur de commande de mise à jour, solidaire d'un arbre polaire de liaison pourvu d'un pignon menant, engrené avec un pignon mené solidaire de l'arbre annuel.

Selon une caractéristique complémentaire de la précédente, le bouton de commande de mise à jour est disposé au pôle Nord, le pignon mené est fixé à l'extrémité Nord de l'arbre annuel et au moins le pignon mené est réalisé en matériau transparent.

Grâce à ces dispositions, la mise à jour de la date indiquée par la position relative de l'image du soleil et des graduations du calendrier annuel est particulièrement simple et rapide. En effet, en tournant à la main le bouton de commande de mise à jour, l'utilisateur du globe terrestre perfectionné selon l'invention, fait tourner l'arbre annuel dans le couplage à friction calibrée qui le relie au second train d'engrenages du sous-ensemble électromécanique. Dans ces conditions, seuls l'écran, la source lumineuse et l'index solaire tournent en même temps que l'arbre annuel. Pendant cette rotation, l'image du soleil projetée au centre de l'hémisphère éclairé tourne dans le plan de l'écliptique de la sphère. De la sorte, la date affichée par la position de cette image en regard des graduations de l'anneau de calendrier placé dans le plan de l'écliptique, devient rapidement la date du jour.

On remarquera ici que ces perfectionnements au globe terrestre décrit dans les brevets cités, sont applicables aux deux formes de réalisation de l'invention initialement prévues, à savoir un globe terrestre pourvu d'un arbre journalier monté fixe ou monté tournant sur son support. Dans le premier cas, la couronne de calendrier annuel est interne à la sphère et montée fixe sur le boîtier du sous-ensemble électromécanique, lui-même monté tournant autour de l'arbre journalier. Dans le second cas, la couronne de calendrier annuel est externe à la sphère et constituée par un anneau plan monté fixe en rotation.

Selon une deuxième caractéristique principale de l'invention, dans un globe terrestre du type précédent, agencé pour constituer un globe-horloge perfectionné pourvu de moyens manuels de mise à l'heure,
- la sphère comporte une représentation des fuseaux horaires ;
- le support de l'arbre journalier comporte une broche creuse ;
- l'arbre journalier est monté tournant sur cette broche ;
- le boîtier du sous-ensemble électromécanique est rigidement lié à l'extrémité de cette broche ;
- l'arbre annuel est vertical lorsque la broche fait un angle sensiblement égal à 23°27′ avec la verticale ;
- la couronne de calendrier annuel est un anneau plan fermé relativement rigide, disposé autour la sphère ;
- un autre plan, gradué en cadran journalier de 24 heures, est placé sur l'anneau de calendrier et monté tournant autour de lui ;
- le double anneau, constitué par le calendrier annuel et le cadran journalier, est adapté à sélectivement matérialiser le plan de l'écliptique et celui de l'équateur ;
- un couplage à friction calibrée est disposé entre le premier train d'engrenages et l'arbre journalier.

Grâce à cette disposition, il est aisé, après avoir mis le globe-horloge à jour, (1) de tourner à la main l'anneau de cadran journalier autour de l'anneau de calendrier annuel et ainsi d'amener rapidement la graduation Midi (12 ou 13 selon l'heure légale du lieu) en face de l'image du soleil et de la date du jour, (2) de placer dans le plan de l'équateur l'anneau double de calendrier annuel et de cadran journalier et (3), par action directe sur la sphère, d'amener le fuseau horaire du lieu concerné en face de la graduation du cadran journalier indiquant l'heure légale en ce lieu. Cette dernière opération est rendue possible du fait de la présence d'un couplage à friction entre l'arbre journalier et le premier train d'engrenages du sous-ensemble électromécanique.

On remarquera ici que l'arbre journalier d'un tel globe terrestre perfectionné peut être monté de deux façons : (1) sur un support fixe et le double anneau est alors adapté à basculer entre deux positions stables correspondant respectivement aux plans de l'équateur et de l'écliptique et (2) sur un support mobile (un anneau méridien vertical installé sur un berceau) et l'anneau double est alors constamment horizontal.

Dans un tel globe terrestre perfectionné selon l'invention, l'état de jour et de nuit sur terre est constamment simulé en accord avec la date affichée cependant que la précision des heures indiquées par les différents fuseaux horaires décroit continuellement d'environ quatre minutes par jour. Pour remettre exactement à l'heure l'ensemble de ces fuseaux, il suffit chaque matin de faire tourner à la main l'anneau de cadran journalier autour de l'anneau de calendrier annuel, de façon à amener la graduation Midi en face de la date du jour.

Selon une troisième caractéristique principale de l'invention, dans un globe terrestre perfectionné du genre décrit ci-dessus, le mouvement électrique d'horlogerie coopère avec le premier train d'engrenages pour faire tourner l'arbre journalier à raison d'un tour en (20 x 73/61) heures.

Grâce à cette disposition, il est aisé, au moyen de composants du commerce tels que micromoteurs de mouvements d'horlogerie, circuits de commande à quartz et pignons standards de l'industrie horlogère, de construire un groupe motoréducteur faisant tourner un arbre intermédiaire à raison d'un tour toutes les vingt heures qu'un engrenage complémentaire de rapport (61/73) transforme en un tour par jour sidéral. En effet, puisque $(1/20) \times (61/73)$ s'écrit encore $(1/24) \times (366/365)$, avec le dispositif selon l'invention, on fait tourner l'arbre journalier à raison d'un tour par jour sidéral, avec une précision supérieure à $2.10^{-6}$.

Selon une quatrième caractéristique principale de l'invention, dans un globe terrestre perfectionné du type décrit ci-dessus,

- le mouvement électrique d'horlogerie comporte un micromoteur pas à pas pourvu d'un circuit de commande nominale à alimentation autonome,
- le micromoteur possède un sens de rotation privilégié lorsque son circuit de commande nominale délivre des impulsions alternatives ayant une fréquence inférieure à une dizaine de Hertz et une durée brève devant leur propre période ;
- le premier train d'engrenages comporte un cliquet disposé en accord avec le sens de rotation privilégié du micromoteur ;
- un inverseur de fonctionnement est associé au micromoteur afin que, dans une première position, le micromoteur soit connecté au circuit de commande nominale et, dans une seconde position, le micromoteur soit à la fois déconnecté de son circuit de commande nominale et connecté à un circuit de commande rapide délivrant une tension alternative à la fréquence du secteur.

Grâce à cette disposition, l'inverseur de fonctionnement du globe terrestre perfectionné selon l'invention étant placé dans sa deuxième position, le micromoteur du sous-ensemble électromécanique tourne toujours dans le sens approprié, quelle que soit la polarité de la première alternance du courant alternatif du secteur qui lui est appliquée. Ce résultat est obtenu grâce au cliquet que comporte un des pignons menant du premier train d'engrenages. En fonctionnement de démonstration,le globe terrestre perfectionné selon l'invention possède une vitesse de rotation plusieurs centaines de fois supérieure à sa vitesse nominale, ce qui lui permet de simuler une journée sur terre en quelques minutes. Cela est à la fois attractif pour le passant qui s'arrête devant une vitrine où l'appareil est exposé et intéressant du point pédagogique pour le professeur de géographie qui fait un cours sur le système Terre-Soleil.

Les caractéristiques et avantages de l'invention ressortiront d'une manière plus précise à la suite de la description d'une forme de réalisation particulière de l'invention, faite ci-après à titre d'exemple non limitatif, en référence aux dessins annexés, dans lesquels :
- la figure 1 représente une vue perspective simplifiée d'un globe terrestre perfectionné selon l'invention ;
- les figures 2A et 2B représentent les vues de face d'une équerre d'assemblage et d'un embout d'articulation de l'anneau de calendrier ;
- la figure 3 représente une vue en coupe simplifiée du globe terrestre selon l'invention ;
- la figure 4 représente la vue en coupe simplifiée des moyens d'entrainement de l'arbre annuel ;
- la figure 5 représente la vue en coupe simplifiée du premier train d'engrenages et de sa liaison avec l'arbre journalier ;
- la figure 6 représente une vue schématique du cliquet monté sur un pignon du premier train d'engrenages ;
- la figure 7 représente une vue schématique du globe terrestre selon l'invention, monté sur un berceau.
- la figure 8 représente un détail du bras de support du globe ;

– la figure 9 représente un schéma des circuits de commande du micromoteur et de la source lumineuse ;

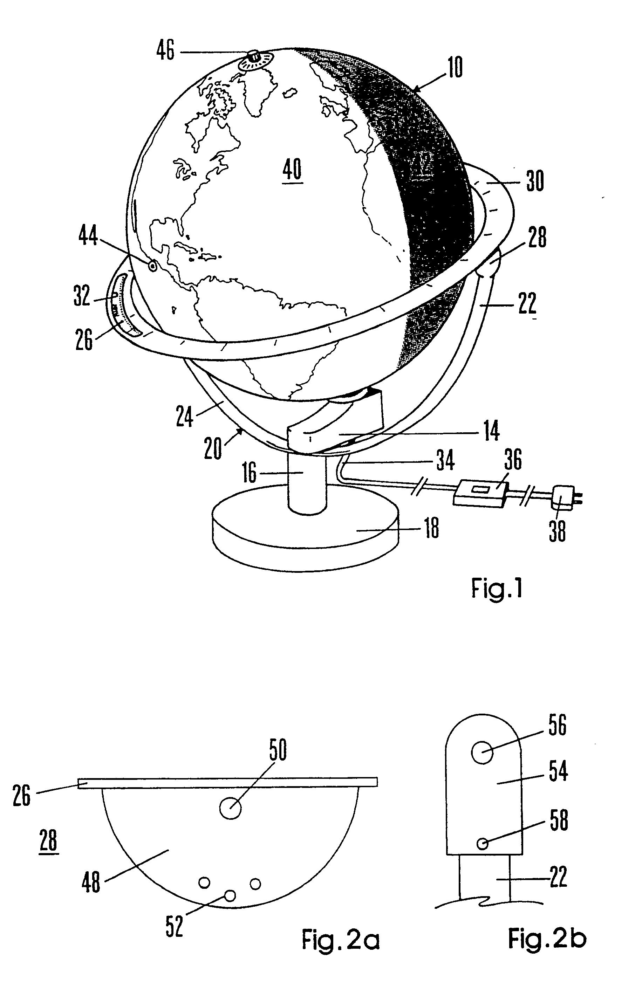

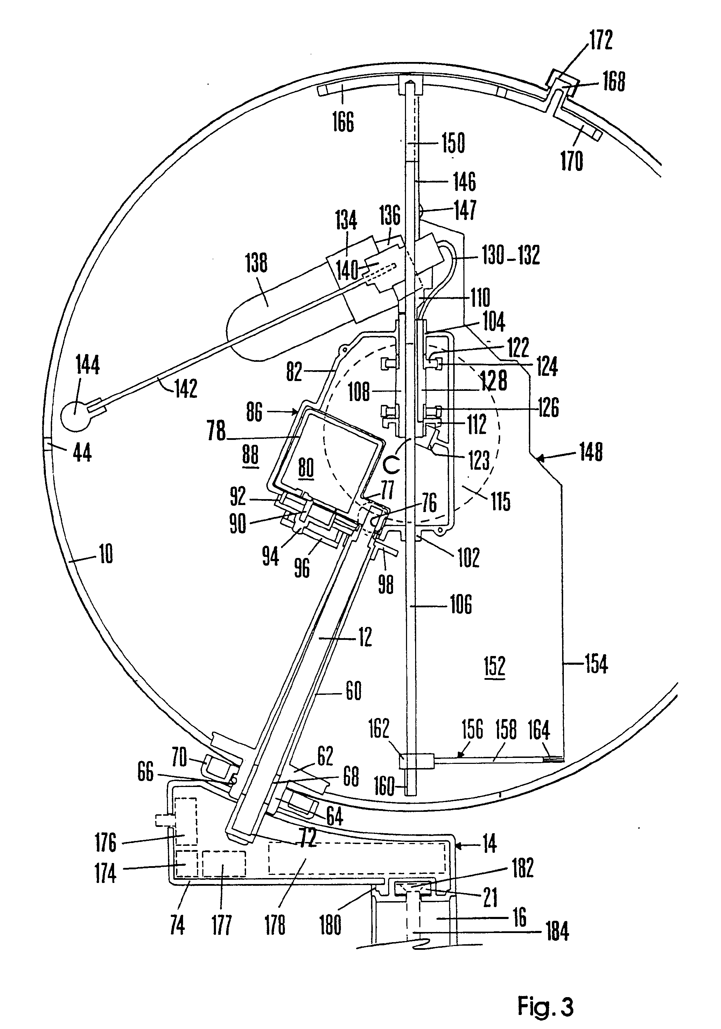

Selon la figure 1, un globe terrestre selon l'invention comporte une sphère creuse 10 à paroi translucide représentant les continents et les fuseaux horaires. La sphère 10 est montée tournante sur une broche polaire creuse 12 (cf.fig.3) fixée à l'extrémité d'un bras 14 profilé en arc de méridien. Le bras 14 est solidaire d'un mât vertical 16, monté sur un pied 18. La broche 12 fait, avec la verticale, un angle sensiblement égal à 23°27′. Une fourche 20 à deux branches 22-24 est rigidement liée au mât 16, les plans médians du bras 14 et de la fourche 20 étant orthogonaux.

Aux extrémités des branches 22-24 de la fourche 20, est monté basculant, entre deux positions correspondant respectivement aux plans de l'équateur et de l'écliptique, un anneau plan fermé 26 relativement rigide, pourvu de deux équerres d'assemblage (telles 28) diamétralement opposées, engagées sur les extrémités des branches 22-24. L'anneau 26 est gradué en calendrier annuel de 365,25 jours (février en comporte $28\frac{1}{4}$), les équerres 28 étant disposées au droit des graduations d'équinoxe (20 mars - 23 septembre). Sur l'anneau de calendrier 26 est monté coulissant un anneau de cadran journalier 30, gradué en 24 heures. L'anneau 30 est pourvu de rebords et recouvre entièrement l'anneau 26, une fenêtre en arc de cercle 32, centrée sur les chiffres horaires 12-13, étant prévue de manière à laisser apparaitre une plage de graduations de calendrier mesurant environ six semaines. Pour faciliter la lecture de ces graduations journalières et annuelles, leur impression sur les anneaux 26 et 30 est faite sur sur des fonds de couleurs différentes (blanc pour 26 et noir pour 30, par exemple).

Le globe terrestre selon l'invention est alimenté par un cordon électrique 34 pourvu d'un interrupteur 36 et d'une prise mâle standard 38. A l'intérieur de la sphère 10, sont aménagés des moyens (décrits plus loin) qui créent sur sa paroi, deux zones sensiblement hémisphériques respectivement éclairée 40 et obscure 42 avec, au centre de la zone éclairée, un point brillant cerclé d'ombre 44, représentant la position du soleil au zénith. Au pôle Nord de la sphère 10, se trouve un bouton 46 permettant la mise à jour de la position du point-soleil 44.

Selon la figure 2A, une équerre d'assemblage 28 est formée par un flanc semi-circulaire 48, solidaire de la face inférieure de l'anneau de calendrier 26. Le flanc 48 comporte un trou-palier 50 et trois cuvettes de calage 52, ces cuvettes étant disposées par rapport au centre du trou-palier 50, de manière à être angulairement écartées l'une de l'autre de sensiblement 23°27′, la cuvette centrale étant placée le long d'une ligne perpendiculaire au plan de l'anneau 26.

Selon la figure 2B, l'extrémité de chacune des branches 22-24 de la fourche 20 est équipée d'un embout 54 pourvu d'un bout d'axe 56 et d'un ergot de calage 58, l'axe 56 et l'ergot 58 étant respectivement adaptés à être engagés dans le trou-palier 50 et dans l'une des cuvettes 52. L'écartement des branches 22-24 de la fourche 20 étant un peu supérieur à celui des deux équerres d'assemblage 28, l'engagement de ces deux équerres sur les embouts 54 de ces branches, est fait sous contrainte et, de la sorte, les bouts d'axe 56 et les ergots de calage 58 sont en permanence respectivement maintenus engagés dans les trous-paliers 50 et dans les cuvettes de calage 52.

Selon la figure 3, la sphère terrestre 10 (constituée de deux hémisphères Nord et Sud, adaptés à être aisément assemblés et désassemblés) est pourvue d'un arbre polaire 60, dit arbre journalier, rigidement lié au pôle Sud. L'arbre journalier 60 possède une collerette d'appui 62 et un manchon de fixation 64, muni d'ergots de serrage tels 66. Sur le manchon 64 est monté un écrou de blocage 70, pourvu de rainures en J, dans lesquelles les ergots de serrage 66 sont engagés de force. Cela produit un pincement d'une partie centrale relativement grande de l'hémisphère Sud de la sphère terrestre 10, entre la collerette 62 de l'arbre journalier 60 et l'écrou de blocage 70.

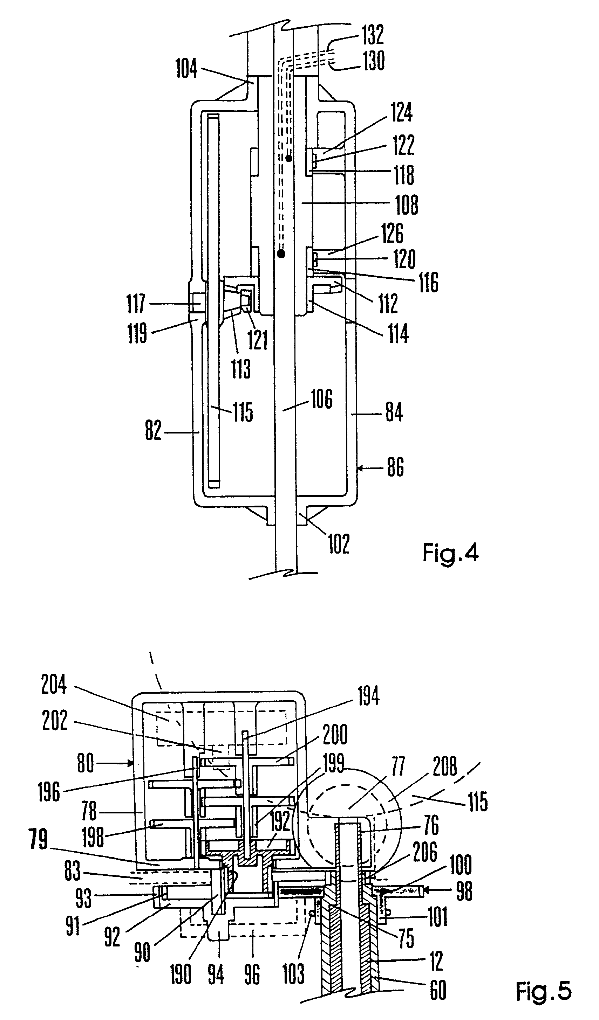

L'arbre journalier 60 est creux, avec une surface intérieure légèrement conique, et il est monté tournant sur la broche 12, laquelle est un tube d'acier rigidement lié au bras de support 14, équipé d'une bague de centrage 68 et d'un embout de fixation 72 (muni d'un ergot de calage angulaire non représenté), adapté à être fermement maintenu entre les deux coquilles (telle 74) qui constituent le bras 14 et sont fixées l'une à l'autre par des vis non représentées. L'extrémité supérieure de la broche 12 est amincie et engagée en force dans un collet 76 aménagé dans un appendice latéral 77 de l'enveloppe sensiblement cubique 78 d'un groupe motoréducteur 80. L'enveloppe 78 est montée fixe à l'intérieur des deux coquilles 82 et 84 (cf.fig.4) qui constituent le boîtier 86 d'un sous-ensemble électromécanique 88. L'enveloppe 78 du groupe motoréducteur 80 est équipée d'un bout d'axe 90 sur lequel est monté tournant un pignon 92, lui-même muni d'un bout d'axe 94 engagé dans un trou-palier aménagé dans un support en forme de U, constitué par deux pièces en L (telle 96) respectivement solidaires des coquilles 82-84. Le pignon 92 engrène avec la tête d'entraînement 98 de l'arbre journalier 60.

Selon les figures 3 et 4, les coquilles 82 et 84, qui constituent le boîtier 86 du sous-ensemble électromécanique 88 du globe terrestre selon l'invention, comportent deux paliers 102 et 104 occupés par un arbre de rotation vertical 106, dit arbre annuel. Les axes des arbres journalier 60 et annuel 106 se coupent sensiblement au centre C de la sphère 10, selon un angle sensiblement égal à 23°27′. Sur l'arbre annuel 106, sont montés en force un premier et un second manchon de liaison 108 et 110. Les extrémités du manchon 108 ont une section plus faible que celle de sa partie centrale. Sur l'extrémité inférieure du manchon 108 est monté un pignon conique 112 à soixante dents, pourvu d'un collier de couplage 114, muni de fentes longitudinales, adapté à exercer une friction calibrée sur le manchon 108. Sur les extrémités du manchon de liaison 108, sont engagées en force deux bagues en laiton 116 et 118, respectivement en contact électrique avec deux lames métalliques souples 120 et 122. Ces lames 120-122 sont soutenues par deux paires de supports isolants 124-126, faisant corps avec la coquille 84 du boîtier 86 et, par ailleurs, elles sont connectées à deux conducteurs électriques (non représentés) traversant la broche creuse 12. L'extrémité supérieure du manchon de liaison 108 est montée tournante dans le palier 104 du boîtier 86.

Dans le manchon 108 (cf. fig.3-4),est pratiquée une découpe longitudinale 128 dans laquelle sont disposés deux conducteurs électriques isolés 130 et 132 respectivement soudés aux bagues 116 et 118.

Le pignon 112 est entraîné par un pignon conique 113 à douze dents, solidaire d'une roue 115 à deux cent quatre vingt treize dents (cf.fig.4). La roue 115 et le pignon 113 forment une pièce unique pourvue d'un arbre de rotation 117, monté tournant dans deux paliers 119 et 121 respectivement aménagés dans la paroi principale de la coquille 82 et dans une potence 123, solidaire d'un flanc de cette coquille 82. Au manchon de liaison 110, sont fixés le collier de montage 134 de la douille 136, connectée aux conducteurs 130-132, d'une ampoule électrique 138 et une embase 140 dans laquelle est plantée la tige 142 d'un index solaire 144. En outre, le manchon 110 est prolongé par une plaquette d'appui 146 sur laquelle est fixé, par rivets tels que 147, un écran opaque 148, relativement rigide.

L'index solaire 144 est constitué par une perle en plastique transparent. L'écran 148, dit écran principal, possède dans sa majeure partie, un contour extérieur circulaire et un rebord plan au centre duquel est pratiquée une rainure radiale 150, occupée par l'arbre annuel 106. L'écran 148 comporte une cavité centrale 152 dont la partie inférieure 154 est un pan semi-cylindrique, centré sur l'axe de l'arbre annuel 106. Le contour circulaire incomplet de l'écran 148 est fermé par celui d'un écran complémentaire 156, lequel est constitué par un plateau semi-circulaire horizontal 158, par une languette verticale en forme de segment circulaire 160 et par un manchon de fixation 162, engagé en force sur l'extrémité Sud de l'arbre annuel 106. Le plateau 158 comporte sur sa périphérie, une rangée de poils souples 164 en contact avec la surface de révolution du pan 154 de l'écran principal 148, la longueur de ces poils étant très supérieure au diamètre de la partie Sud de l'arbre journalier 60. De la sorte, comme cela est dit dans les brevets cités, la lampe 138 et les deux écrans 148-156 coopèrent pour créer sur la paroi de la sphère 10, deux zones sensiblement hémisphériques 40 et 42, respectivement éclairée et obscure. La lampe 138 et la perle 144 coopèrent ensemble pour projeter au centre de la zone éclairée 40, la tache lumineuse relativement intense 44, qui représente la position du soleil au zénith. Par ailleurs, les poils souples 164 permettent à l'arbre journalier 60 de traverser aisément le couloir qui sépare les deux écrans 148-156, au cours du printemps et de l'été de l'hémisphère Nord.

Sur l'extrémité Nord de l'arbre annuel 106, est engagé en force le moyeu creux d'une première roue dentée 166. Le pôle Nord de la sphère terrestre 10 comporte un trou-palier traversé par un arbre polaire de liaison 168, solidaire d'une seconde roue dentée 170 engrenant avec la première 166. Sur l'extrémité de l'arbre de liaison 168, est engagé en force un bouton de commande 172. Les roues 166-170 sont transparentes, ont la forme de calottes sphériques et sont pourvues de dents relativement grandes, de manière à rester engrenées malgré la flexion des pièces en porte-à-faux qui supportent l'arbre annuel 106.

Le bras 14 de support du globe est creux et contient le circuit de commande 174 du moteur du sous-ensemble électromécanique 88, l'inverseur de fonctionnement 176 du globe, une prise mâle miniature 177, adaptée à être connectée au secteur alternatif et deux piles électriques 178, pour l'alimentation du circuit de commande 174. Chacune des deux coquilles (telle 74) qui constituent le bras 14, comporte un des éléments de la base de raccordement 180 de ce bras avec le mât 16. Dans cette base 180, est aménagée une cavité ouverte de part et d'autre, occupée à la fois par la partie médiane 21 de la fourche 20 et par la tête 182 d'une tige filetée 184. La tige 184 traverse successivement un trou percé dans la partie médiane 21 de la fourche 20, le mât 16 constitué par un cylindre creux et un trou percé au centre du pied 18. La base de raccordement 180 du bras 14 comporte un épaulement servant d'appui à l'extrémité supérieure du mât 16. Un écrou, logé dans une découpe pratiquée dans la face inférieure du pied 18, est vissé sur la tige 184 et, de la sorte, rend solidaires les uns des autres le bras 14, la fourche 20, le mât 16 et le pied 18.

Selon la figure 5 qui représente une vue schématique de la partie inférieure du sous-ensemble électromécanique 88, le pignon 92 comporte une denture interne 91 pourvue de trente six dents et une denture externe 93 pourvue de soixante et une dents. Sur la denture interne 91 du pignon 92, sont engagées les quinze dents taillées dans le moyeu 190 d'un pignon 192 à soixante dents. Le moyeu 190 qui comporte un épaulement prenant appui sur la paroi inférieure 79 de l'enveloppe 78, est monté tournant dans un palier relativement large, aménagé dans cette paroi 79. Dans l'enveloppe 78 du motoréducteur 80, en appui sur la paroi inférieure 83 du boîtier 86, sont disposés deux arbres parallèles 194 et 196, équipés chacun de deux pignons libres identiques, tels 198 et 200, comportant une roue à soixante dents et un moyeu à douze dents. Ces quatre pignons doubles s'engrènent en cascade, le moyeu denté du dernier 198 engrenant avec la roue du pignon 192. La roue dentée du premier pignon 200 engrène avec les dix dents du pignon de sortie 202 d'un micromoteur 204, rigidement monté sur deux plots (non apparents) solidaires de l'enveloppe 78. Deux conducteurs électriques traversent la broche polaire 12 et relient les bornes du micromoteur 204 aux circuits contenus dans le bras de méridien 14.

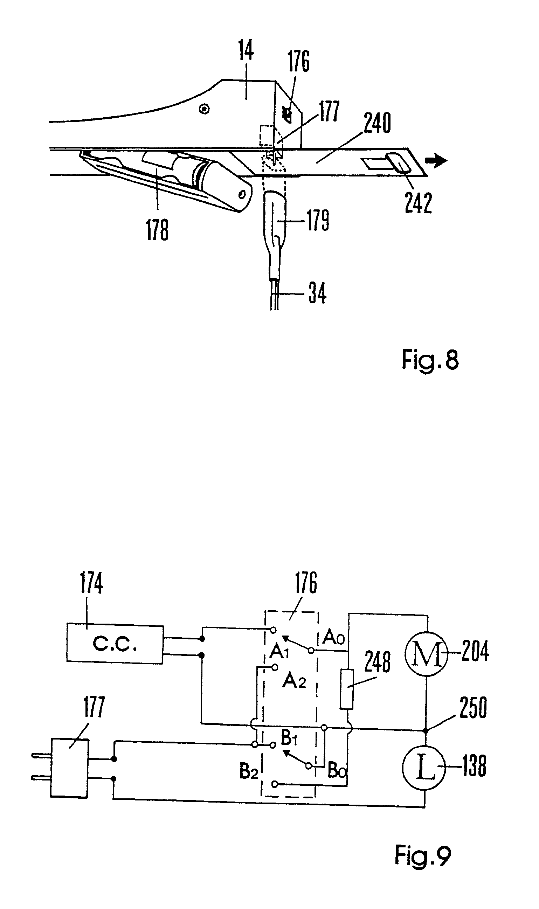

Le micromoteur 204 est du type pas à pas, d'un modèle utilisé notamment dans les programmeurs d'appareils domestiques. Il comporte un rotor cylindrique constitué par un aimant bipolaire radial et un stator à deux cornes polaires dissymétriques. Grâce à quoi, ce micromoteur est adapté à faire un tour dans un sens imposé lorsqu'il reçoit, avec un intervalle de temps relativement important (quelques dizaines de millisecondes), deux impulsions successives de polarités opposées. Le micromoteur 204 est alimenté par un circuit de commande électronique à quartz 174 (cf.fig.1 et 9), d'un type standard dans l'industrie horlogère, adapté à délivrer des impulsions alternativement positives et négatives, à la fréquence d'une impulsion toutes les quatre secondes. De la sorte, le micromoteur 204 tourne à la vitesse d'un tour toutes les huit secondes. Lorsque le micromoteur 204 est alimenté par une tension sinusoïdale à fréquence relativement basse (quelques centaines de Hertz), il se comporte en moteur synchrone et il tourne dans l'un ou l'autre sens, en fonction des conditions initiales d'application de cette tension.

La denture extérieure 93 à soixante et une dents du pignon 92 engrène avec les soixante treize dents du pignon 100 de la tête d'entrainement 98 de l'arbre journalier 60. Cette tête d'entraînement 98 est engagée en butée sur une découpe pratiquée à l'extrémité supérieure de l'arbre journalier 60, et elle est reliée à cet arbre, par un collier à fentes 101 muni d'un jonc de serrage 103. Un couplage à friction calibrée est ainsi créé entre la tête 98 et l'arbre 60. A l'intérieur de l'extrémité supérieure de l'arbre journalier 60, est aménagé un appui qui repose sur un palier plan 75 , constitué par l'épaulement formé à la base de l'extrémité supérieure amincie 76 de la broche polaire 12. La bague de centrage 68 de l'arbre journalier 60 est en appui glissant sur la partie inférieure de la broche polaire 12. De la sorte, le couple de frottement de l'arbre journalier 60 reposant sur le palier plan 75 et tournant autour de la broche polaire 12, est minimal.

Sur le pourtour de l'extrémité supérieure de l'arbre journalier 60, est taillé un pignon 206, pourvu de vingt dents, qui engrène avec une roue en cloche 208, pourvue de soixante dents, montée sur un arbre engagé dans deux trous-paliers respectivement aménagés dans l'appendice 77 de l'enveloppe 78 et dans la coquille 84 du boîtier 86. La roue 208 possède un moyeu (non apparent), taillé en pignon droit à douze dents, qui engrène avec la roue 115 à deux cent quatre vingt treize dents.

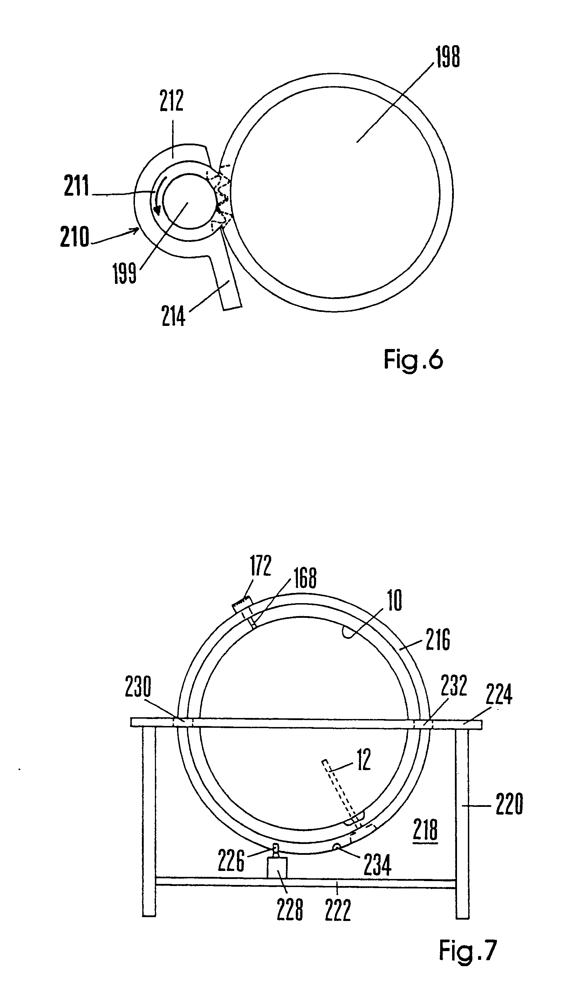

Selon la figure 6, le moyeu denté 199, qui entraîne la roue 198 du groupe moto-réducteur 80, est muni d'un cliquet 210 comportant une crosse 212 et un manche 214. La crosse enserre le moyeu 199 avec une très légère friction, sur environ les deux tiers de sa circonférence. L'extrémité de la crosse 212 est taillée en biseau et le manche 214, radialement disposé par rapport à la crosse 212, est en appui glissant sur les dents de la roue 198, lorsque le moyeu 199 tourne dans le sens de la flèche 211 . Dans le cas contraire, l'extrémité de la crosse 212 pénètre entre les dents engagées de la roue 198 et du moyeu 199 et les bloque progressivement.

Selon la figure 7, la sphère terrestre 10 (équipée des éléments selon l'invention, illustrés à la figure 3) est montée à l'intérieur d'un anneau méridien vertical 216, placé dans un berceau 218. Ce berceau 218 comporte plusieurs montants, tels 220, maintenus assemblés par des traverses, telles 222, et par un anneau plan horizontal 224. La sphère terrestre 10 est montée tournante, à la fois, sur la broche polaire 12 radialement fixée à l'intérieur de l'anneau méridien 216 et sur l'arbre polaire de liaison 168 du bouton 172 de commande de mise à jour du globe. L'arbre de liaison 168 traverse un passage radial pratiqué dans l'épaisseur de l'anneau méridien 216. Bien que non illustrée pour ne pas surcharger le dessin, la partie de l'anneau de méridien 216, à laquelle est fixée la broche polaire 12, est aménagée en enveloppe des composants 174-176-177-178, de la même façon que le bras de méridien 14 de la figure 3. Une des traverses 222 est équipée d'un galet 226 monté tournant sur un support excentré 228. L'anneau horizontal 224 comporte deux découpes radiales 230-232, diamétralement opposées, dans lesquelles est glissé sans frottement notable, l'anneau méridien 216. De cette façon, l'anneau méridien 216 repose sur le galet 226, est maintenu vertical par les découpes 230-232 et peut tourner autour d'un axe horizontal virtuel, disposé selon un diamètre de l'anneau 224. Deux encoches, telles que 234, sont pratiquées à l'extérieur de l'anneau méridien 216 à une distance angulaire sensiblement égale à 23°27' et à des emplacements tels que l'engagement du galet 226, dans l'une ou l'autre de ces encoches, place l'anneau horizontal 216 dans le plan de l'écliptique ou de l'équateur de la sphère terrestre 10. L'anneau horizontal 216 est double. Il comporte une piste interne, graduée en calendrier annuel de 365,25 jours et une piste externe à fenêtre, graduée en cadran journalier de 24 heures, montée coulissante sur la première, de la même façon que l'anneau 30 sur l'anneau 26 de la figure 1. Les graduations de solstices (21 juin et 22 décembre) de la piste interne apparaissent en face des encoches 230-232. De cette façon, les plans de l'équateur et de l'écliptique de la sphère terrestre 10 se coupent suivant une ligne joignant les graduations des équinoxes .

Selon la figure 8, le bras de méridien 14, qui sert de support à la broche polaire 12 et de boîtier pour le circuit de commande 174, la prise mâle 177, l'inverseur de fonctionnement 176 et les piles électriques 178, comporte, sur sa face inférieure, un couvercle à tiroir 240 pourvu d'une fenêtre 242. Le couvercle 240 étant fermé, la fenêtre 242 donne accès à la prise mâle miniature 177, sur laquelle peut être engagée une prise femelle du même type 179, placée à l'extrémité du cordon d'alimentation 34 du globe. Lorsque la prise femelle 179 est retirée, le couvercle à tiroir 240 peut être ouvert et donner accès aux piles 178.

Selon la figure 9, sont représentées les connexions de l'inverseur double 176, associé au circuit de commande 174 et à la prise mâle 177 respectivement utilisés pour alimenter en régime nominal le micromoteur 204 et la lampe 138. Les bornes de sortie du circuit de commande 174 sont respectivement connectées au plot $A_1$ et au contact mobile $B_0$ de l'inverseur 176. Une des bornes de sortie de la prise 177 est connectée aux plots $A_2$ et $B_1$ de l'inverseur 176 et l'autre reliée à l'une des bornes de la lampe 138. Le contact mobile $A_0$ de l'inverseur 176 est directement relié à l'une des bornes du micromoteur 204 et indirectement, à travers une impédance 248 (résistance ou condensateur), de valeur petite devant l'impédance du micromoteur 204, au plot $B_2$ de cet inverseur. Le contact mobile $B_0$ de l'inverseur 176 est relié à la borne 250, commune au micromoteur 204 et à la lampe 138.

En référence aux figures 1 à 5, on voit qu'il est particulièrement aisé et rapide de mettre à jour et à l'heure le globe terrestre perfectionné selon l'invention. Pour cela, l'anneau double 26-30 est tout d'abord placé dans le plan de l'écliptique de la sphère terrestre 10, la fenêtre 32 de l'anneau de cadran journalier 30, encadrant la date du jour portée par l'anneau de calendrier annuel 26. Dans cette position de l'anneau double 26-30, les ergots 58 des embouts d'extrémité 54 des branches 22-24 de la fourche 20, sont engagés dans les cuvettes centrales 52 des équerres d'assemblage 48 de l'anneau 26 et celui-ci est alors horizontal. On remarquera ici que, grâce à ses rebords, l'anneau 30 est correctement maintenu sur l'anneau 26. En outre, grâce à la fenêtre relativement étroite 32 et aux fonds de couleurs différentes des anneaux 26 et 30, la recherche et la lecture de la date du jour sont particulièrement aisées.

Ensuite, on agit à la main sur le bouton de commande 46 de mise à jour du globe. On fait ainsi tourner les roues dentées 170 et 166 et donc l'arbre annuel 106. En effet, le manchon de liaison 108 de l'arbre annuel 106 tourne alors librement dans le collier de serrage 114. Cela se produit dès lors que le couple exercé sur ce manchon 108, par action sur le bouton 46, est supérieur au couple de frottement calibré, appliqué sur ce manchon 108 par le collier de serrage 114, maintenu bloqué par le mécanisme amont à grand rapport de réduction auquel il est relié. Dans ces conditions, l'écran principal 148 et l'écran complémentaire 156, de même que la lampe 138 et l'index solaire 144, tous solidaires de l'arbre annuel 106, tournent en même temps, cependant que la sphère terrestre 10 reste fixe. Il en résulte que l'image du soleil 44, projetée par l'index 144 sur la paroi de la sphère terrestre 10, se déplace dans le plan de l'écliptique de cette sphère, en passant progressivement d'un tropique à l'autre. Par ailleurs, du fait que les roues dentées 166-170 sont transparentes, le grand cercle qui sépare les zones, éclairée et obscure, projetées sur la paroi de la sphère, ne présente pas d'altération notable dans la région du pôle Nord. De la sorte, l'image du soleil 44 est rapidement amenée en face de la date du jour et l'état d'éclairement de la terre en ce jour de l'année, est alors parfaitement simulé.

Une fois le globe terrestre selon l'invention ainsi mis à jour, pour le mettre à l'heure, on place tout d'abord l'anneau double 26-30 dans le plan de l'équateur de la sphère 10. Deux des cuvettes symétriques externes 52 des équerres d'assemblage 48 de l'anneau de calendrier 26 sont alors occupées par les ergots de calage 58 des embouts 54 de la fourche 20. Ensuite, on place la graduation Midi du cadran journalier (chiffre 12 en hiver et 13 en été, pour tenir compte des heures légales), en face exactement de la date du jour (et donc sur le méridien où se trouve l'image du soleil), en faisant tourner à la main l'anneau de cadran journalier 30 autour de l'anneau de calendrier 26. Puis, en agissant à la main sur la sphère terrestre 10, rigidement liée à l'arbre journalier 60, on peut rapidement amener le fuseau horaire du lieu où l'on se trouve, à se placer en face de la graduation de l'heure qu'il est en ce lieu. Cette opération est possible, du fait de la présence d'un couplage à friction calibrée entre l'extrémité de l'arbre journalier 60 et le collier de serrage 101 de la tête d'entraînement 98 de cet arbre.

En référence aux figures 3, 4 et 5, on voit que, grâce aux caractéristiques du circuit de commande 174, à celles du micromoteur 204 et à celles des engrenages du groupe motoréducteur 80, le pignon 92, placé à la sortie de ce groupe 80, fait un tour toutes les (8x6x625x36/15) secondes, soit un tour toutes les vingt heures. De la sorte, grâce aux nombres de dents adéquats du pignon 92 et de la roue 100 de la tête d'entraînement 98 de l'arbre journalier 60, cet arbre, ainsi entraîné par le mouvement électrique d'horlogerie et le premier train d'engrenages selon l'invention, tourne à raison d'un tour toutes les (20x73/61) heures, soit un tour en 365/366 jour solaire moyen, ce qui, avec une précision meilleure que 2.10⁻⁶, correspond à un tour par jour sidéral.

De même, grâce aux nombres de dents adéquats des pignons du second train d'engrenages, intercalé entre l'arbre journalier 60 et l'arbre annuel 106, un rapport de réduction de (293 x 5/4) = (366,25) est réalisé entre ces deux arbres. De la sorte, comme cela est enseigné dans les brevets cités en références, l'arbre annuel 106 tourne à raison d'un tour par année tropique, lorsque le micromoteur 204, alimenté par des impulsions à fréquence nominale, fait tourner l'arbre journalier 60, à raison d'un tour par jour sidéral.

On va maintenant faire référence aux figures 6 et 9. Selon la figure 9, on voit que dans la position (1) de l'inverseur de fonctionnement 176, le circuit de commande à quartz 174 alimente le micromoteur pas à pas 204 et le secteur alternatif, fourni par la prise mâle 177, est appliqué aux bornes de la lampe 138. Cette position (1) de l'inverseur 176 correspond aux conditions de fonctionnement normal du globe terrestre perfectionné selon l'invention. Dans ce cas en effet, le globe est éclairé et tourne à sa vitesse nominale. Si l'on coupe l'arrivée du secteur alternatif, au moyen de l'interrupteur 36 de la figure 1, le globe n'est plus éclairé mais son mécanisme interne continue à fonctionner. De la sorte, au moment où le globe sera rallumé, il indiquera immédiatement la date du jour puis l'heure en tout lieu, aussitôt que la graduation Midi du cadran journalier aura été placée en face de cette nouvelle date.

En plaquant l'inverseur 176 en position (2), le micromoteur 204 est connecté aux bornes d'un circuit de commande rapide constitué par la résistance de faible valeur 248 en série avec la lampe 138, alimentée par le secteur alternatif. Dans ces conditions, si la position à cet instant du rotor du micromoteur pas à pas 204 par rapport aux pôles dissymétriques du stator, permet à la première alternance du courant alternatif à 50 Hertz qui lui est alors appliqué, d'être active (ou, à la suivante de polarité inverse, dans le cas contraire), le micromoteur 204 démarre. Et, si la rotation a lieu dans le sens privilégié par la dissymétrie des pièces polaires du micromoteur et par la présence du cliquet 210 sur un engrenage du groupe motoréducteur 80, il se met à tourner en moteur synchrone. Un tel comportement du micromoteur pas à pas 204 s'explique par le fait que le temps de retour du rotor à une position de repos entre deux excitations usuelles du stator, est notablement supérieur à la demi-période de la tension sinusoïdale à 50 Hz qui lui est alors appliquée et ne peut donc en rien gêner un fonctionnement en moteur synchrone. Dans le cas où le sens de rotation pris par le rotor du micromoteur 204 n'est pas le sens privilégié défini plus haut, le cliquet 210 intervient aussitôt que l'extrémité du biseau de sa crosse 212 s'est engagée entre les dents du pignon 198 et du moyeu 199. Ce qui a pour effet de bloquer la rotation commencée, en faisant jouer l'élasticité des dents concernées, puis de permettre au rotor du micromoteur 204 de rapidement se trouver dans une position l'autorisant à démarrer dans l'autre sens. Dans les deux cas, le micromoteur pas à pas 204 se comporte en moteur synchrone et, avec une fréquence du secteur de 50 Hz, il tourne à une vitesse quatre cents fois plus élevée que la vitesse nominale. Une telle vitesse rapide correspond, pour la sphère terrestre 10, à une période de rotation de trois minutes et trente six secondes. Cette vitesse de démonstration transforme le globe terrestre selon l'invention en un mobile original, intéressant pour l'acheteur potentiel qui le regarde, pour le professeur de géographie ou l'agent de voyages qui l'utilise ou pour le particulier qui le possède.

En référence à la figure 8, on voit que la fenêtre 242 du couvercle à tiroir 240 du bras de méridien 14 n'autorise la connexion à la prise mâle 177 de la prise femelle 179 du cordon de liaison 34, que dans le cas où le couvercle 240 est fermé. De plus, cette disposition oblige à préalablement déconnecter cette prise femelle 179, avant de pouvoir ouvrir ce couvercle 240 pour avoir accès aux piles 178 d'alimentation du circuit de commande 174. De la sorte, on obtient une totale sécurité d'emploi du globe terrestre selon l'invention, puisque le remplacement des piles ne peut se faire qu'après avoir déconnecté le globe du secteur alternatif.

L'invention n'est pas limitée au globe terrestre perfectionné décrit dans les exemples non-limitatifs illustrés ou présentés ci-dessus.

Une de ces variantes est un globe terrestre passif qui diffère du globe actif décrit ci-dessus par le fait qu'il ne comporte pas de mouvement d'horlogerie. Dans ce cas, le boîtier 86 est pratiquement vide et se trouve réduit à n'être que le support de paliers à friction calibrée, occupés par les arbres journalier 60 et annuel 106. Avec un globe terrestre selon l'invention, ainsi privé de sa fonction d'horloge, il est cependant possible, en agissant à la main sur le bouton de mise à jour, sur la sphère terrestre et sur l'anneau de cadran journalier, tout à la fois, de simuler l'éclairement de la terre par le soleil en accord avec les saisons et d'afficher la date du jour et l'heure en tout lieu.

Une autre variante de l'invention consistera à déplacer du pôle Nord au pôle Sud, les moyens de mise à jour du globe. Pour ce faire, les roues dentées à grandes dents 166-170 seront remplacées par deux pignons coniques standards, disposés dans le boîtier 86 et respectivement montés solidaires des arbres journalier 60 et annuel 106. De son côté, l'arbre de liaison court 168 qui traverse le pôle Nord, sera remplacé par un arbre de liaison long traversant la broche polaire 12 et son embout de fixation 72. Et, finalement, le bouton de commande de mise à jour 172 pourra être remplacé par tout organe adapté à entraîner en rotation l'extrémité de ce nouvel arbre de liaison. Un tel organe sera, par exemple, un groupe moto-réducteur ou simplement une roue moletée qui ressortira de chacune des parois latérales du bras de méridien 14, à travers une fente aménagée à cet effet. La première variante (celle avec moteur) convient plus particulièrement aux globes de grand diamètre, dont l'accès au pôle Nord n'est pas aisé.

Une autre variante consistera à remplacer l'impédance 248, mise en série avec la lampe 138 pour constituer le circuit de commande rapide du micromoteur 204, par un transformateur abaisseur de tension ayant son primaire connecté au secteur alternatif.

Une autre variante, particulièrement intéressante pour les globes de grand diamètre, consistera à rendre automatique la rotation annuelle de l'anneau de cadran journalier 30 autour de l'anneau de calendrier annuel 26. Pour cela, un des rebords de cet anneau de cadran journalier 30 sera denté et son nombre de dents sera un multiple de 365,25 (par exemple, 2.922 avec un facteur de multiplication M=8). Ce rebord denté sera entraîné en rotation par le pignon de sortie d'un groupe moto-réducteur semblable au groupe 88, solidaire de l'anneau de calendrier annuel 26, pourvu d'un nombre de dents égal audit facteur de multiplication M et entraîné à raison d'un tour par jour solaire moyen.

## Revendications

1. Globe terrestre simulant le déroulement des jours et des nuits sur terre en accord avec les saisons et, en outre, indiquant la date du jour, du genre comprenant :

    – une sphère creuse (10), à paroi translucide, représentant les continents, pourvue d'un arbre polaire creux (60), dit arbre journalier, rigidement lié au pôle Sud et monté sur un support (14 ou 216) ;
    – un écran opaque (148-156), à contour sensiblement circulaire, pourvu d'un arbre de rotation (106), dit arbre annuel, disposé suivant un diamètre du contour ;
    – une source lumineuse électrique (138), solidaire de l'arbre annuel (106), la source et l'écran (148-156) étant adaptés à coopérer ensemble pour créer sur la paroi de la sphère (10), deux zones (40-42), sensiblement hémisphériques, respectivement éclairée et obscure ;
    – un sous-ensemble électromécanique (88) comprenant :
        . un boîtier (86) pourvu de paliers (75-102-104), occupés par les arbres journalier (60) et annuel (106), les paliers étant disposés de manière que les axes desdits arbres se coupent sensiblement au centre de la sphère, suivant un angle sensiblement égal à 23°17',
        . un mouvement électrique d'horlogerie (204), relié à un premier (202...100) et à un second (112...206) train d'engrenages, le premier train étant disposé entre le mouvement d'horlogerie et l'arbre journalier (60) et le second, disposé entre l'arbre journalier et l'arbre annuel (106) ;
    – le sous-ensemble électromécanique (88) étant adapté à faire tourner la zone éclairée (40) autour de l'axe de l'arbre journalier (60), à raison d'un tour par jour sidéral et autour de l'axe de l'arbre annuel (106), à raison d'un tour par année tropique ;
    – un index solaire (144), fixé à l'extrémité d'une tige (142) rigidement liée à l'arbre annuel (106), adapté à projeter une image du soleil (44), au centre de la zone éclairée (40);
    – une couronne (26), graduée en calendrier annuel de 365,25 jours, disposée concentriquement par rapport à la sphère (10) et coaxialement par rapport à l'arbre annuel (106) ;
    – l'index solaire (144) et la couronne de calendrier (26), coopérant ensemble pour indiquer une date de l'année ;
    – caractérisé en ce qu'il comprend en outre :
    – un couplage à friction calibrée (114), disposé entre l'arbre annuel (106) et le second train d'engrenages (112... 206) ;
    – un organe extérieur (172) de commande de mise à jour, solidaire d'un arbre polaire de liaison (168), pourvu d'un pignon menant (170) engrené avec un pignon mené (166), solidaire de l'arbre annuel (106).

2. Globe terrestre simulant le déroulement des jours et des nuits sur terre en accord avec les saisons et, en outre, indiquant la date du jour et l'heure en tout lieu, du genre comprenant :

    – un support (14 ou 216), pourvu d'une broche creuse (12) ;
    – une sphère creuse (10), à paroi translucide représentant les continents et les fuseaux horaires, pourvue d'un arbre polaire creux (60), dit arbre journalier, rigidement lié au pôle Sud et monté tournant sur la broche (12) ;
    – un écran opaque (148-156), à contour sensiblement circulaire, pourvu d'un arbre de rotation (106), dit arbre annuel, disposé suivant un diamètre du contour ;
    – une source lumineuse électrique (138), solidaire de l'arbre annuel (106), la source et l'écran (148-156) étant adaptés à coopérer ensemble pour créer sur la paroi de la sphère (10), deux zones (40-42) sensiblement hémisphériques, respectivement éclairée et obscure ;
    – un index solaire (144), fixé à l'extrémité d'une tige (142) rigidement liée à l'arbre annuel (106), adapté à projeter une image du soleil (44), au centre de la zone éclairée (40);
– un sous-ensemble électromécanique (88) comprenant :

. un boîtier (86) pourvu de paliers (75-102-104), occupés par les arbres journalier (60) et annuel (106), lesdits paliers étant disposés de manière que les axes desdits arbres se coupent sensiblement au centre (C) de la sphère (10), suivant un angle sensiblement égal à 23°17′ et le boîtier (86) étant rigidement lié (76-77) à l'extrémité supérieure de la broche polaire (12), de manière que l'arbre annuel (106) soit vertical lorsque l'axe de la broche (12) fait un angle sensiblement égal à 23°17′ avec la verticale ;

. un mouvement électrique d'horlogerie (204) relié à un premier (202...100) et à un second (112...206) train d'engrenages, le premier train étant disposé entre le mouvement d'horlogerie et l'arbre journalier (60) et le second, disposé entre l'arbre journalier et l'arbre annuel (106) ;

– le sous-ensemble électromécanique (88) étant adapté à faire tourner la sphère (10) autour de l'axe des pôles à raison d'un tour par jour sidéral et l'écran (148-156) autour de son axe de rotation, à raison d'un tour par année tropique ;

– un anneau plan (26), gradué en calendrier annuel de 365,25 jours, disposé autour de la sphère (10) et agencé de façon à pouvoir sélectivement matérialiser les plans de l'écliptique et de l'équateur ;

– l'image du soleil (44) et les graduations de l'anneau de calendrier (26) coopérant ensemble pour indiquer une date de l'année ;

– caractérisé en ce qu'il comprend en outre :
– un autre anneau plan (30), gradué en cadran journalier de 24 heures, disposé coulissant sur l'anneau de calendrier annuel (26), les fuseaux horaires et les graduations du cadran journalier (30), coopérant ensemble pour indiquer les heures en tous lieux ;

– un premier couplage à friction calibrée (101), disposé entre l'arbre journalier (60) et le premier train d'engrenages (100...202) ;

– un second couplage à friction calibrée (114), disposé entre l'arbre annuel (106) et le second train d'engrenages (112... 206) ;

– un organe extérieur (172) de commande de mise à jour, solidaire d'un arbre polaire de liaison (168), pourvu d'un pignon menant (170) engrené avec un pignon mené (166), solidaire de l'arbre annuel (106).

3.    Globe terrestre permettant de simuler le déroulement des jours et des nuits sur terre en accord avec les saisons, avec indication de la date du jour et de l'heure en tout lieu, du genre comprenant :

– un support (14-16-18), pourvu d'une broche creuse (12) faisant un angle sensiblement égal à 23°17′ avec la verticale ;

– une sphère creuse (10), à paroi translucide représentant les continents et les fuseaux horaires, pourvue d'un arbre polaire creux (60), dit arbre journalier, rigidement lié au pôle Sud et monté tournant sur la broche (12) ;

– un écran opaque (148-156), à contour sensiblement circulaire, pourvu d'un arbre de rotation (106), dit arbre annuel, disposé suivant un diamètre du contour ;

– une source lumineuse électrique (138), solidaire de l'arbre annuel (106), la source et l'écran (148-156) étant adaptés à coopérer ensemble pour créer sur la paroi de la sphère (10), deux zones (40-42) sensiblement hémisphériques, respectivement éclairée et obscure ;

– un index solaire (144), fixé à l'extrémité d'une tige (142) rigidement liée à l'arbre annuel (106), adapté à projeter une image du soleil (44) au centre de la zone éclairée (40) ;

– un boîtier (86) pourvu de paliers (75-102-104) occupés par les arbres journalier (60) et annuel (106), lesdits paliers étant disposés de manière que les axes desdits arbres se coupent sensiblement au centre (C) de la sphère (10), suivant un angle sensiblement égal 23°17′ et le boîtier (86), rigidement lié à l'extrémité supérieure de la broche (12), de manière que l'arbre annuel (106) soit vertical ;

– un anneau plan (26), gradué en calendrier annuel de 365,25 jours, disposé autour de la sphère (10) et agencé de façon à pouvoir sélectivement matérialiser les plans de l'écliptique et de l'équateur ;

– l'image du soleil(44) et les graduations de l'anneau (26) de calendrier annuel, coopérant ensemble pour indiquer une date de l'année ;

– caractérisé en ce qu'il comprend en outre :
– un autre anneau plan (30), gradué en cadran journalier de 24 heures, disposé coulissant sur l'anneau de calendrier annuel (26), les fuseaux horaires et les graduations du cadran journalier coopérant ensemble pour indiquer les heures en tous lieux ;

– un premier couplage à friction calibrée (101), disposé entre l'arbre journalier (60) et la paroi (83) du boîtier (86) ;

– un second couplage à friction calibrée (114), disposé entre l'arbre annuel (106) et au moins un palier (102-104) du boîtier (86) ;

– un organe extérieur (172) de commande de mise à jour, solidaire d'un arbre polaire de liaison (168), pourvu d'un pignon menant (170), engrené avec un pignon mené (166), solidaire de l'arbre annuel (106).

4. Globe terrestre selon l'une des revendications 1, 2, 3 ;
   – caractérisé en ce que l'organe de commande de mise à jour est un bouton (172) placé au pôle Nord, le pignon mené (166) est fixé à l'extrémité Nord de l'arbre annuel (106), les deux pignons (166-170) sont équipés de dents relativement hautes et au moins le pignon mené (166) est réalisé en matériau transparent.

5. Globe terrestre selon la revendication 2 ou 3 ;
   – caractérisé en ce que l'anneau (30) de cadran journalier recouvre entièrement l'anneau (26) de calendrier annuel et comporte une fenêtre (32) en arc de cercle, disposée le long de graduations horaires centrées sur la plage des chiffres 12-13 et agencée pour laisser apparaître une plage de graduations de calendrier d'environ six semaines.

6. Globe terrestre selon la revendication 1 ou 2,
   – caractérisé en ce que le mouvement électrique d'horlogerie (174-204) coopère avec le premier train d'engrenages (100... 202) pour faire tourner l'arbre journalier (60), à raison d'un tour toutes les (20 x 73/61) heures et en ce que le second train d'engrenages (112...206) possède un rapport de réduction égal à (293 x 5/4).

7. Globe terrestre selon la revendication 2 dans lequel,
   – la broche polaire (12) est radialement fixée à l'extrémité d'un bras (14) profilé en arc de méridien, solidaire d'un mât vertical (16) monté fixe sur un pied (18) ;
   – la broche polaire (12) est inclinée de sensiblement 23°27' par rapport à la verticale ;
   – une fourche (20) à deux branches (22-24) est montée fixe sur le mât vertical (16), les plans médians de la fourche (20) et du bras (14) étant orthogonaux ;
   – l'anneau double de calendrier annuel (26) et de cadran journalier (30) est monté basculant aux extrémités de la fourche (20) ;
   – caractérisé en ce que :
   – l'anneau (26) de calendrier annuel comporte sur sa face inférieure, au droit des graduations des équinoxes, deux équerres d'assemblage (28) engagées sous contrainte sur les extrémités de la fourche (28) ;
   – les équerres d'assemblage (28) et les extrémités des branches (22-24) de la fourche (20) sont respectivement pourvues de moyens d'articulation (50-56 et 52-58) adaptés à coopérer, sous l'effet de ladite contrainte, afin de faire prendre à l'anneau double (26-30) deux positions stables correspondant respectivement aux plans de l'équateur et de l'écliptique.

8. Globe terrestre selon la revendication 2,
   – caractérisé en ce que :
   – la broche polaire (12) est radialement fixée à l'intérieur d'un anneau méridien (216), porté par un berceau (218) et monté tournant dans un plan vertical ;
   – l'anneau double (224) de calendrier annuel et de cadran journalier est horizontal et monté fixe sur le berceau (218) ;
   – l'anneau méridien (216) et le berceau (218) sont pourvus de moyens de calage (226-134) disposés de façon que l'anneau méridien (216) puisse sélectivement prendre deux positions stables plaçant l'anneau double (224) de calendrier annuel et de cadran journalier, dans les plans de l'écliptique et de l'équateur du globe.

9. Globe terrestre selon la revendication 2,
   – caractérisé en ce que :
   – le mouvement électrique d'horlogerie comporte un micromoteur pas à pas (204) pourvu d'un circuit de commande nominale (174) à alimentation autonome (178),
   – le micromoteur (204) possède un sens de rotation privilégié lorsque son circuit de commande nominale (174) délivre des impulsions alternatives ayant à la fois une fréquence inférieure à une dizaine de Hertz et une durée brève devant leur propre période ;
   – le premier train d'engrenages (202...100) comporte un pignon équipé d'un cliquet (210) disposé en accord avec le sens de rotation privilégié du micromoteur (204) ;
   – un inverseur de fonctionnement (176) est associé au micromoteur (204) afin que, dans une première position, le micromoteur (204) soit connecté au circuit de commande nominale (174) et, dans une seconde position, le micromoteur (204) soit à la fois déconnecté du circuit de commande nominale (174) et connecté à un circuit de commande rapide (248-138), délivrant une tension alternative à la fréquence du secteur.

10. Globe terrestre selon la revendication 9,
    – caractérisé en ce que :
    – l'ensemble constitué par le circuit de commande nominale (174), son alimentation autonome (178) et, le cas échéant, le circuit de commande rapide (248), l'inverseur de fonctionnement (176) et une prise électrique mâle (177), destinée à être branchée sur le secteur par l'intermédiaire d'un cordon de liaison (34) pourvu d'un interrupteur (36), est disposé dans un logement aménagé dans un élément (14) du support de l'arbre journalier (60) ;

– ledit logement comporte un couvercle à tiroir (240) pourvu d'une fenêtre (242) donnant libre accès à la prise électrique mâle (177) lorsque le couvercle (240) est fermé et interdisant cet accès lorsque le couvercle est ouvert.

Fig.1

Fig.2a

Fig.2b

Fig. 3

Fig.4

Fig.5

17

Fig.6

Fig.7

Fig.8

Fig.9